# EUROPEAN PATENT SPECIFICATION

(11) **EP 4 535 234 B1**
(45) Date of publication and mention of the grant of the patent: **07.10.2026**
(21) Application number: 24172279.2
(22) Date of filing: 24.04.2024
(51) Int. Cl.: G06N 3/045, G06N 3/082

(54) **SYSTEM AND METHOD FOR COMPRESSING LARGE LANGUAGE MODEL USING TENSOR NETWORKS**
SYSTEM UND VERFAHREN ZUR KOMPRIMIERUNG EINES GROSSSPRACHENMODELLS UNTER VERWENDUNG VON TENSORNETZWERKEN
SYSTÈME ET PROCÉDÉ DE COMPRESSION DE MODÈLE DE LANGAGE LARGE À L'AIDE DE RÉSEAUX DE TENSEURS

(30) Priority: 02.10.2023 EP 23383011
(43) Date of publication of application: 09.04.2025
(73) Proprietor: Multiverse Computing S.L., 20014 Donostia / San Sebastián (ES)
(72) Inventor: Tomut, Andrei V., 20014 Donostia / San Sebastián (ES); Jahromi, Saeed S., 20014 Donostia / San Sebastián (ES); Orús, Román, 20014 Donostia / San Sebastián (ES)
(74) Representative: Sonnenberg Harrison Partners

(56) References cited:
- PEIYU LIU ET AL: "Enabling Lightweight Fine-tuning for Pre-trained Language Model Compression based on Matrix Product Operators", ARXIV.ORG, CORNELL UNIVERSITY LIBRARY, 201 OLIN LIBRARY CORNELL UNIVERSITY ITHACA, NY 14853, 4 June 2021 (2021-06-04), XP081983824

## Description

### CROSS-REFERENCE TO RELATED APPLICATIONS

This application claims priority of the European Patent Application number EP 23383011., filed on 2 October 2023.

### FIELD OF THE INVENTION

The field of the invention relates to a computer-implemented method and a system for compression of pre-trained layers of Large Language Model (LLM).

### BACKGROUND OF THE INVENTION

So-called large language models (LLM) are a type of language model which are noted for their ability to achieve apparently general-purpose language understanding and generation. The LLMs acquire these abilities by using massive amounts of input data to learn billions of parameters during their training. The LLMs consume large computational resources during their training and operation. The LLMs are based on artificial neural networks (mainly transformers) and they can be (pre-)trained using self-supervised learning and semi-supervised learning. As so-called "autoregressive language models," the LLMs work by taking an input text and repeatedly predicting the next token or word.

The concept of the transformer is a deep learning architecture developed by Google and is based on a multi-head attention mechanism. Input text is converted to a numerical representation - termed "tokens" - and the tokens are converted into a vector via look-up from a table. The token is contextualised at leach layer with other tokens via a multi-head attention mechanism. This contextualisation allows signals for key ones of the tokens to be amplified whilst the signal for less important ones of the tokens is diminished.

Neural network architectures based solely on the attention mechanisms are known in the art. For example, Ashish Vaswani et al. "Attention is all you need," arXiv:1706.03762v7, 4 December 2017 uses this approach for machine translation. The attention mechanism is a layer of neural networks added to the deep learning models to focus attention of the deep learning models on specific parts of data by assigning different weights to different parts of the data. For example, in machine translation, the attention mechanism is used to align and selectively focus on relevant parts of a source sentence during the translation process by amplifying the signal corresponding to the key parts of the source sentence. The learning model using the attention mechanism is able therefore to assign different weights for the signals of more important words or phrases in the source sentence.

A fundamental element of an LLM model of the Vaswani paper is a so-called "layer." The Vaswani paper described a multi-head attention module which is used to compute attention scores between various parts of an input sequence (such as the afore-mentioned source sentence). The input sequence is presented from an input of the LLM model to the multi-head attention module. The multi-head attention module is made up of so-called "multiple attention heads." The attention heads compute a separate set of attention scores based on the (same) input sequence. These attention scores are then combined to produce a final set of attention scores that are used to weight the input sequence. For example, the multi-head attention module can be used in natural language processing tasks by allowing the LLM to focus on the various parts of the input sequence (i.e., the source sentence or other text) at different times. The focusing on the various parts of the input sequence allows the LLM model to capture long-range dependencies between different words in the sentences of the input sequence and also to handle variable-length ones of the input sequences (i.e., source sentences with different numbers of words).

Since the publication of Vaswani et al. paper, the attention mechanism has played a role in a number of tasks relying on deep networks. One known area in which the attention mechanism in attention-based architectures is used in the domain of Large Language Model (LLM). The attention mechanism is incorporated into the large language models like BERT, GPT, BART, or LLAMA, for example. These large language models are used for tasks in deep networks such as translation, text summarization, question answering, and chatbot functionality.

The architecture of the LLMs comprises multiple layers of different types of neural networks, like recurrent layers, feedforward layers, embedding layers, and the aforementioned attention layers. These layers of different types of neural networks work together to process an input text and generate output predictions. The LLMs use deep learning techniques to train on massive text datasets, learning grammar, semantics, and context and generally employ the so-called "Transformer architecture."

The Transformer architecture is a neural network which is described in the aforementioned Vaswani paper. The Transformer architecture enables understanding relationships within the input sequence and allows to predict the next word in the sentence of the input sequence. The Transformer architecture is a type of neural network that is able to process entire sequences of data at once, rather than one element at a time like "traditional" recurrent neural networks. As set out in the Vaswani paper, the Transformer architecture is made up of two main components: the encoder and the decoder. The encoder takes the input sequence and generates a hidden representation of that input sequence. The decoder then takes that hidden representation and generates an output sequence.

Attention-based architectures have been used in accomplishing tasks of translation, text summarization, question answering and chatbot functionality. However, the attention-based architectures require a high amount of computational power (and energy) to be trained and also for being used in the deep networks. For example, to pre-train a 3 *LLaMA-2-Chat* language models, a cumulative of 3.3 Mega GPU-hours of computation on hardware of type A100-80GB with Max Thermal Design Power (TDP) of 350-400W is required. CO₂ emissions during the pretraining of the *3 LLaMA-2-Chat* language model were estimated to be 539 tonnes of the carbon dioxide equivalent.

In addition, after pretraining of the large language model, it is not possible to run the large language model even with the smallest number of parameters (seven billion parameters are required for the Falcon-7B, for example) on a classical computing device with an GPU capacity. It would require approximately 27GB of RAM only for storing the Falcon 7B language model to run the seven billion parameters on the classical computing device. Therefore, it is challenging for users to run the large language model even with the smallest number of parameters on the classical computing device.

One of the challenges in use of the attention-based architecture is a considerable number of resources necessary for storing the training language model and for running the pretrained language model on the classical computing device. The considerable number of resources generated by the training language model is due to a large number of datasets required for training the language model and to the very large dimension of a parameter space. In machine learning, the neural network is a model that consists of a directed graph, with weights (i.e., real numbers) on edges of the directed graph. The parameter space is known as a weight space, and the learning process consists of updating the parameters, for example by gradient descent. Peiyu Liu et al: "Enabling Lightweight Fine-tuning for Pre-trained Language Model Compression based on Matrix Product Operators", arxiv.org, Cornell University Library, 201 Olin Library Cornell University Ithaca, NY 14853, 4 June 2021, XP081983824 discloses a method for compressing pre-trained layers of a pre-trained language model (PLM) having a plurality of layers, the method comprising:
- identifying layers of the PLM;
- decomposing the PLM into a tensor network;
- compressing the tensor network.

There is therefore a need to reduce the number of resources necessary for training and storing the large language model.

There are two challenges known in the prior art to find a compression method to compress the multi-head attention module in the Transformer architecture but retain sufficiently high quality of information. The first challenge is related to a non-linear function of the Transformer architecture which is difficult to compress. The second challenge is that the multi-head attention model cannot be directly integrated, after the compression, into the encoder and a decoder framework of the Transformer architecture.

It is an object of the present document to provide a method and a system which reduces the amount of resource required for training the large language model and storing the large language model.

### BRIEF SUMMARY OF THE INVENTION

The invention is laid out in the appended independent claim(s). Further advantageous aspects and/or embodiments are presented in the appended dependent claims.

The present document describes an approach to train and to run the language model only on data processing machines with an extremely high amount of computational power. It is known that not all of the parameters of the language model are independent. Therefore, the parameter space can be reduced if some of the parameters are represented as compilations of other parameters of the language model. The representation of the parameters in a way of compilations could be achieved by tensor networks which are known to represent the states of physical systems.

The present document describes integration of pre-trained layers of LLM architectures into tensor network layers which store the parameters of the language model in a more efficient way.

This method set out in this document involves "tensorizing" self-attention and multilayer perceptron layers of a large language model using a tensor network. The tensorizing, effectively truncates correlations present in the large language model (LLM). The degree of truncation can be controlled via a bond dimension of the tensor network. The method enables a significant reduction in the size of the LLM (and thus storage space required), while maintaining accuracy. In practice, the compressed LLM requires less energy and memory, and operations such as training, retraining, and inference become more efficient and require smaller resources.

In a first aspect, the method is a computer implemented method for compressing pretrained layers of the large language model (LLM). The large language model has a plurality of layers and weight matrices. The method comprises identifying layers of the LLM with a weight matrix and then decomposing the weight matrix of the LLM into a tensor network followed by compressing the tensor network. The compressed tensor network is stored in a data storage unit. The computer implemented method further comprises determining an optimal virtual edge dimension of a Matrix Product States (MPS) form. The decomposition of the weight matrices into the tensor network enables the tensor network to be reduced in size to remove storage requirements.

The layers of the LLM are, for example, at least one of self-attention layers or multi-perceptron layers. These layers are used in LLMs.

The decomposing of the weight matrix into the tensor network is carried out, in one aspect, by creating a tensor star formed from a plurality of tensors. The tensors have a smaller dimension than the weight matrices.

In one aspect, the plurality of the tensors (in the tensor network) comprises at least pre-programmed one core tensor. The LLMs have in one implementation a core tensor which is pre-defined.

The method of the compressing comprises using a random search algorithm for performing a permutation on edges of nodes of the tensor network This enables a variety of different compression approaches to be tried to identify an optimal compression to reduce the size of the data whilst retaining the information.

The method further comprises splitting the edges of the nodes of the tensor network into n groups and merging the edges of the nodes of the tensor network into a single-index vector.

Finally, the computer implemented method comprises reconstructing the initial weight matrix to enable the LLM to be used. The method further comprises computing difference between elements of the initial weight matrix and the reconstructed weight matrix. The method as set out is repeated for a number of times to determine the best decomposition of the tensor network which reduces the amount of storage required but provides sufficient information.

In a further aspect, the document describes a computer system for compressing parameters of a large language model (LLM). The computer system comprises a compressing module for implementing an algorithm for compressing the parameters of the large language model.

The method can be used for a large language model (LLM) in a deep neural network for implementing at least one of translation, text summarization, question answering, or chatbot functionality tasks.

### DESCRIPTION OF THE FIGURES

Fig. 1 shows an example of a computer system for implementing the method of this document.
Fig. 2 shows a tensor representation of a weight matrix.
Fig. 3 shows a flow chart of the method of this document.
Fig. 4 shows a Tucker decomposition of an attention tensor, which is not according to the claimed invention.
Fig. 5 shows a flow chart of the Tucker decomposition, which is not according to the claimed invention.
Fig. 6 shows a flow chart of a random search algorithm.
Fig. 7 shows a flow chart of initialization of a tensor layer.
Fig. 8 shows a comparison of time taken to converge a Heston model for Tensor Neural Networks and classical Dense Neural Networks.
Fig. 9 shows benchmarking tests (a) Retraining time (in hours) per epoch, using distributed retraining, for the compressed (left) and uncompressed (right) LlaMa-2 models, for the Gigaword and XSum datasets. (b) Time (in hours) for forward and backward passes, using distributed retraining, for the compressed (left) and uncompressed (right) LlaMa-2 models, for the Gigaword and XSum datasets.
Fig. 10 shows Rouge scores for compressed (left) and uncompressed (giht) LlaMa-2 models for the (a) Gigaword and (b) XSum datasets. Rouge1 refers to the overlap of unigrams, Rouge2 to the overlap of bigrams, RougeL to the statistics of the longest common subsequence in the text, and RougeLsum, similarly to RougeL, but considering sentencelevel information.

### DETAILED DESCRIPTION OF THE INVENTION

The invention will now be described on the basis of the drawings. It will be understood that the embodiments and aspects of the invention described herein are only examples and do not limit the protective scope of the claims in any way. The invention is defined by the claims.

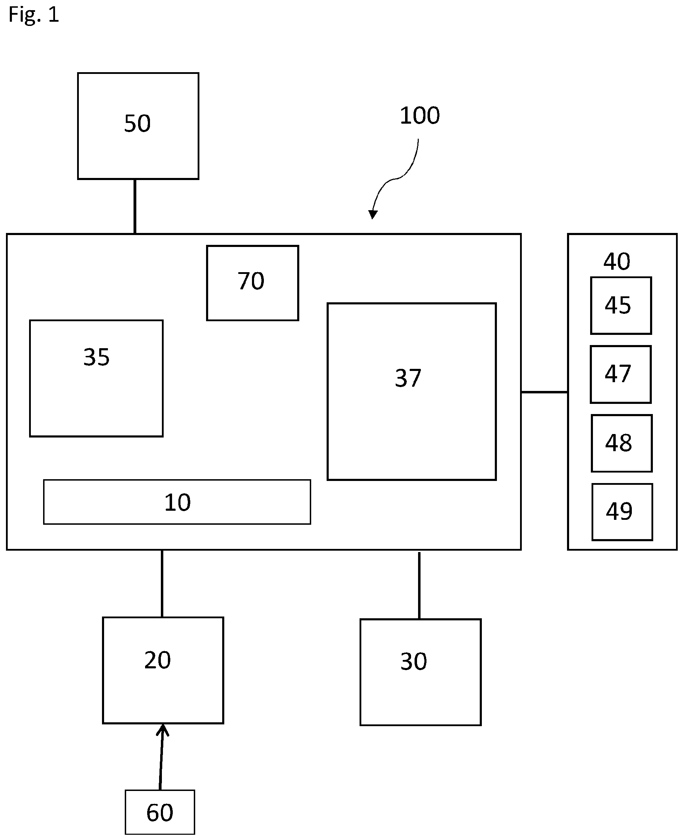

Fig. 1 shows an example of a computing system for implementing the computer-implemented method of this document. Fig. 1 shows a computing system 100 having a (classical) central processor unit (CPU) 10 with at least one input device 20 and at least one output device 30. The system 100 is shown using a single CPU 10, but it will be appreciated that the system 100 can be extended with the addition of a quantum processor 50 or a quantum emulator (running on a classical , which are connected to the CPU 10.

The computing system 100 comprises, in an example, the (classical) central processing unit 10 which is connected to a data storage unit 40 (i.e., one or more memory devices), and the one or more input devices 20 and the one or more output devices 30. The input device(s) 20 enable the input of training data 45 which is stored in the data storage unit 40 and later for the input of an input sequence 60.

One or more graphics processing units (GPU) 35 for processing vector and tensor calculations and a field programmable gate array (FGPA) 41? for control logic that can also be connected to the CPU 10. The vector and tensor calculations for training a large language model (LLM) can be spread around different ones of the GPUs 35, if more than one GPU 35 is provided. This enables distributed training of the LLM if this is required.

The computing system 100 is connected to a computer network, such as the Internet. It will be appreciated that the arrangement of the computing system 100 of Fig. 1 is merely exemplary and other units or elements may be present in the computing system 100. It will also be appreciated that there may be more than one input devices 20 and more than one output devices 30 located at multiple locations and that there may be a plurality of data storage units 40 also located at multiple locations. The many input devices 20 and output devices 30 and the data storage units 40 are connected by the computer network.

A large language model 47 is stored in the data storage units 40 and is fed using data through the many input devices 20. The sources of the data are many varied. It is known, for example, that some developers of the large language models have scraped websites and crawled the Internet to obtain the data. Other large language models are constructed from internal data. The method set out in this document is not limited to any particular source of data.

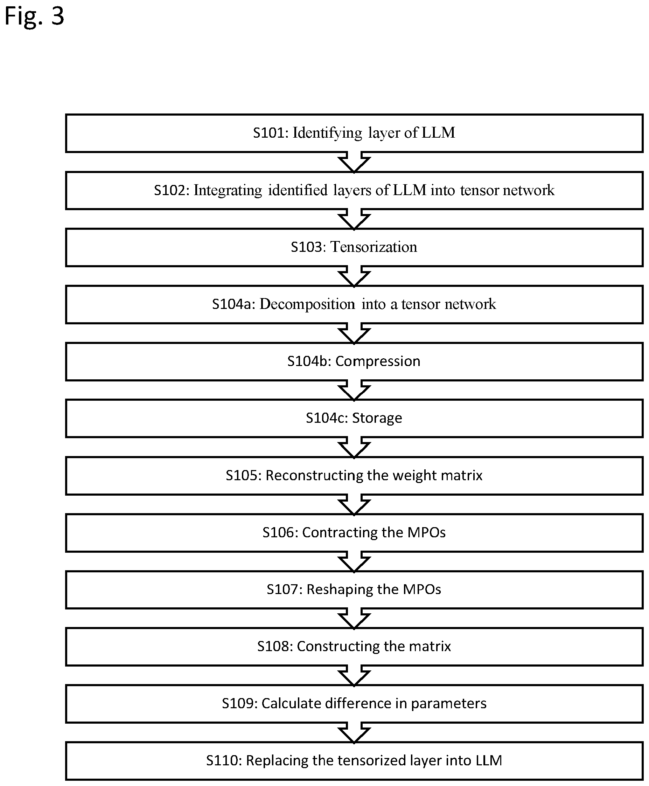

The method for compressing an amount of data stored in the data storage units 40 will now be described in connection with Fig. 3 which shows a flow diagram of the method. In a first step S101, an initial layer of the LLM 47 is identified. The choice of the identified initial layer is arbitrary. When the initial layer is identified, the next step S 102 is to integrate the identified initial layer of the LLM 47 into tensor network layers. This step S 102 is called recycling or upgrading of layers of the LLM 47.

In one non-limiting example, the language model *Llama-2-7b-hf* is used for the implementing the method, but this is not limiting of the invention, and other language models may be used. The *Llama-2-7b-hf* model is a fine-tuned generative text model with (currently) 7 billion parameters. The *Llama-2-7b-hf* model is optimized for dialogue use cases and converted into Hugging Face Transformers format. Hugging Face transformers are provided by the Hugging Face community at the following website: huggingface.co. The *Llama-2-7b-hf* module is part of the Llama-2 family of large language models (LLMs), which includes pretrained and fine-tuned generative text models ranging in scale from 7 billion to 70 billion parameters. The *Llama-2-7b-hf* model has self-attention layers and multi-perceptron layers with weight matrices 48 that can be tensorized as explained below.

When the identified layers have been recycled in the step S102, the next step is to start S103 a tensorization process. A tensor is a multi-dimensional array represented by T_{αβγ} that describes a multilinear relationship between sets of algebraic objects related to a vector space. The subscripts αβγ denote the tensor dimensions (in this case 3 dimensions, as there are three subscripts) and this value is termed the "rank" of the tensor. The tensors can map between different objects such as vectors, scalars, and other tensors. There are many types of tensors, including scalars and vectors, dual vectors, multilinear maps between vector spaces, and dot product operation. The tensors are defined independent of any basis.

Tensorization is the process of transforming or mapping lower-order data to higher-order data. For example, the low-order data can be a vector, and the tensorized result can be a matrix, a third-order tensor (i.e., rank three), or a higher-order tensor. The low-order data can also be a matrix or a third-order tensor. As explained above, tensorization is often used to compress data and reduce complexity of the data while preserving initial features of the data. In one non-limiting example of the present application, the data is at least one of the text data required for translation, text summarization, question answering and chatbot functionality.

To start the tensorization process in the step S103, a weight matrix 48 of the layer needs to be represented. The weight matrix 48 will also be stored in the data storage units 40. In machine learning, the weight matrix 48 is a matrix of numerical values that represent the strength of connections between nodes in the layer of the neural network of the LLM 47. The numerical values are used to transform the input data from the input sequence within the neural network's hidden layers. For example, when the input data enters a node in the neural network, the input data is multiplied by a weight value. The resulting output from the node is either observed or passed to the next layer in the neural network. The weight matrix 48 is typically contained within hidden layers of the neural network. The weight matrix 48 is adjusted during training of the neural network to improve the accuracy of the language model's predictions.

Tensor neural networks (TNN) and tensor convolutional neural networks (TCNN) are examples of deep neural networks (NN) in which the weight matrix 48 of the hidden layers of the large language model 47 is replaced by a tensor network 49. The tensor neural networks have better performance and accuracy than standard deep neural networks for reducing parameter space and thus the amount of storage required to store the LLM 47. In the Tensor neural networks, the tensorization takes place only at the level of the hidden layers (e.g., trainable weights). However, training of the language model is generically performed by the CPU 10 and the one or more GPUs by optimizing the contracted trainable weight matrices 48 of the layers based on standard optimization techniques, for example a gradient descent and automatic differentiation.

The standard optimization techniques are efficient and accurate. However, these known standard optimization techniques target only the global minimum of a loss function. It is challenging for the standard optimization techniques to correlate and to entangle the parameters of the weight matrices 48 in the LLMs 47. The standard optimization techniques are also hard to scale. The behaviour of the loss function monitors the training convergence in these approaches, and distinguishing local minima from actual global minima is, in principle, very difficult.

An efficient representation of the weight matrices 48 can be obtained by replacing the weight matrices 48 of the large language models 47 using Matrix Product Operators (MPO) having a bond dimension χ. This aspect does not belong to the claimed invention. The MPOs are created by executing sequential Singular Value Decompositions (SVDs) on the weight matrices 48 and retaining the largest χ singular values at each SVD. The replaced weight matrices 48 for a new tensorized layer which has several trainable weights are then represented by the MPO. The resulting TNN is scalable and can have any desired number of TN layers to form a deep neural network.

It is necessary to know the final shape of the weight matrix 48 (i.e., input dimension, output dimension). The most common way to treat the problem of the weight matrix representation is to split initial input dimension and initial output dimension into smaller dimensions such that a tensor rank of each new dimension is a prime number. However, the use of a tensor rank which is a prime number is not limiting of the invention. The product of the tensor ranks of all the new dimensions is equal to the product of the input dimension and the output dimension of the module layer.

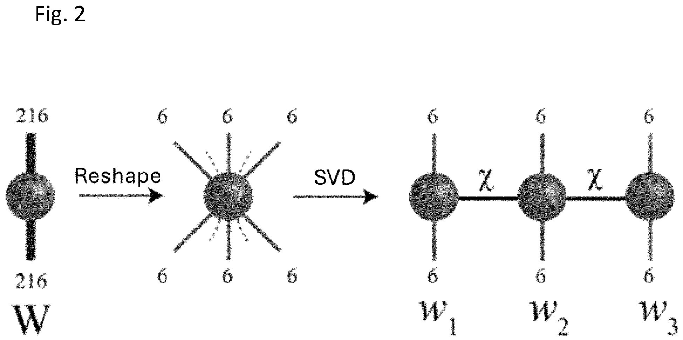

Fig. 2 shows a tensor representation of the initial weight matrix W which has a dimension of 216 x 216 to illustrate this point. It will be appreciated that the value 216x216 is merely illustrative and not limiting of the invention. The initial two dimension of the weight matrix are split into smaller dimensions, as shown by the "tensor star" in the middle of Fig. 2, whereby the product of the smaller dimensions is equal to the initial dimension. The tensor star is then converted by two sequential SVDs to form the resulting tensor network of 2×36χ+36χ² parameters, amounting to the sum of parameters of each tensor, with χ being the MPO bond dimension serving as a truncation parameter. In the diagrammatic representation of MPOs shown in Fig. 2, circles represent individual ones of the tensors, lines indicate the tensor indices and lines connecting circles represent contracted shared indices between the tensors.

It will be appreciated that there are an infinite number of possibilities to decompose in step S104a the weight matrix W into "the tensor star" shown on middle left of Fig. 2 and then into the tensor network of the right of Fig. 2. However, not all of the possibilities will lead to an efficient decomposition. In order to reduce the number of possibilities for the tensor decomposition, a number of core tensors is adapted to each training model task. For example, a number of the core tensors can be programmed in advance, set, or decided by a user of the training model.

After the decomposition in step S104a, the tensor is compressed in step S104b via truncations of the indices of the tensors in the tensor network 49 and stored in step S104c in the data storage unit 40. The compressed tensor can be used for recomputing a new weight matrix for the associated layer. It will be noted that the size of the (re-computed) new weight matrix will be slightly different from the size of an initial (before the decomposition) weight matrix since during the compression as less relevant information was lost.

The reconstruction of the weight matrix 48 in step S105 is carried out by contracting the MPOs in step S106 followed by re-shaping in step S107 the MPOs into the form of a tensor star. Finally, the tensor start is re-shaped back into a matrix form in step S108.

The difference between the elements of the initial weight matrix 48 and the reconstructed weight matrix is calculated in step S109 to determine whether the reconstructed weight matrix is smaller than the initial weight matrix 48. This process is repeated a number of times using different permutations and the smallest one of the reconstructed weight matrices is kept in step S110. This value will provide an acceptable decomposition.

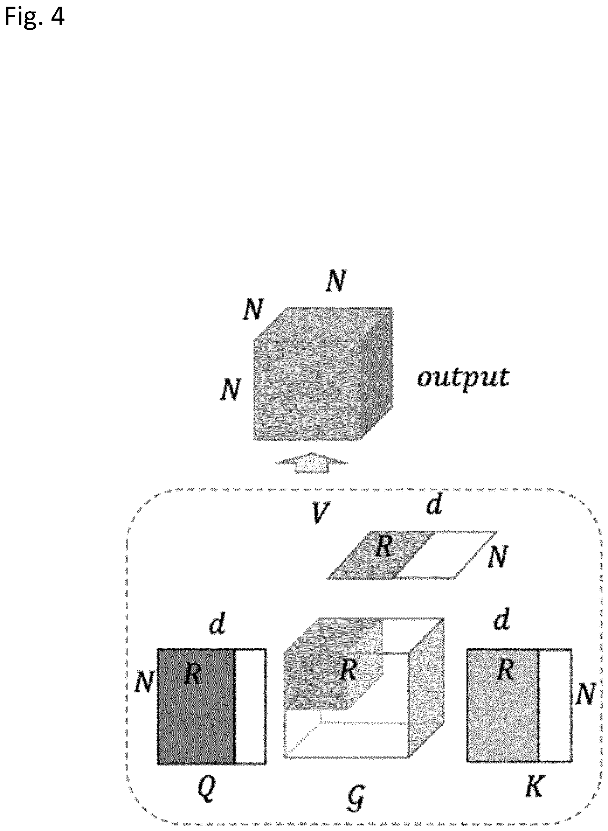

In aspects not falling under the scope of the claims, the core tensor is a compressed tensor that is used in a Tucker decomposition of a larger tensor, as shown on Fig. 4. Fig. 4 shows blocks representing a query matrix Q, a key matrix K as well as a value matrix V of the LLM 47. The query matrix Q and the key matrix K are derived from the input sequence to the LLM 47. The key matrix K represents a relation strength of the words in the input sequence. The value matrix V is calculated from the query matrix Q and the key matrix K to be used as the output. In Fig. 4, it is assumed that the matrices are three factor matrices which are composed of three groups of orthogonal basis vectors. R is the rank of the tensor and N is the length of the input sequence. The dimension of the matrices is given by d. The new single block attention is the core tensor G.

In aspects not falling under the scope of the claims, the Tucker decomposition decomposes the tensor network 49 into a set of matrices and one small core tensor. The Tucker decomposition reduces the size of indices of the large tensor with minimal loss of the information. The obtained compressed tensor is the "core" tensor. The core tensors are ranging from the number of two to the rank of the tensor representation. The number of the core tensors is a hyperparameter in the neural network.

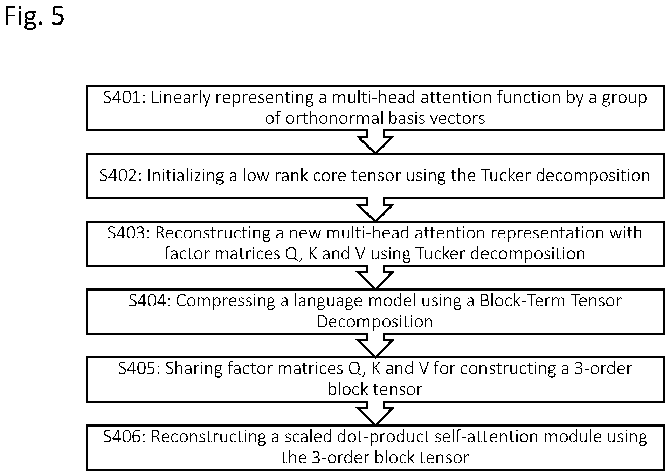

The non-claimed method of the Tucker decomposition is shown on Fig. 5. A single-block attention module is built based on the Tucker decomposition. The Tucker decomposition is a low-rank decomposition method. In the Vaswani et al. paper a multi-head attention module is a principal part of the Transformer architecture. The multi-head attention module is constructed by a large number of parameters. As set out in the paper, Vaswani et al. computes the multi-head attention module based on a set of queries derived from the input sequence simultaneously. The set of queries is packed together into the query matrix Q, and keys matrices and values matrices are packed together into the key matrix K and the value matrix V, respectively. The multi-head attention module adopts a non-linear function *softmax* over two matrices Q and K.

A non-linear function of the transformers in the Transformer architecture is difficult to compress. In order to overcome this challenge, the output of the multi-head attention function of the self-attention model is linearly represented in step S401 by the group of orthonormal basis vectors. After linear representation, a low rank core tensor is initialized in the step S402 using the Tucker decomposition. The Tucker decomposition reconstructs in step S403 a new multi-head attention representation with factor matrices Q, K and V.

A Block-Term Tensor Decomposition (BTD) is used in order to construct the multi-head attention with the factor matrices Q, K and V and in order to compress the language model. The compression of the large language model using the Block-Term Tensor Decomposition takes place in step S404. The multi-linear attention module uses idea of parameters sharing, for example, sharing factor matrices across multiple blocks. The Block-Term Tensor Decomposition (BTD) is a combination of CP (CANDECOMP/PARAFAC) decomposition and the Tucker decomposition. The difference with the prior art documents is that the three factor matrices Q, K and V are shared in step S405 in constructing each 3-order block tensor.

The 3-order block tensor reconstructs in step S406 the scaled dot-product self-attention module in the Transformer by a sum on a particular dimension. In these non-claimed aspects, LLM compression combines a low-rank approximation principle and parameters sharing principle at the same time. Therefore, the LLM compression by the present method achieves higher compression ratios. The self-attention module (for example, a scaled dot-product attention) in the Transformer network is split into the 3-order block tensor (the output of multi-linear attention) which allows to improve accuracy.

It is known challenge in the prior art that the multi-head attention model cannot be directly integrated after the LLM compression into the encoder and the decoder framework of the transformer network. Three steps need to be performed in order to address this challenge. In the first step, the average of each block tensor is computed. In the second step, multiple matrices are formed by a tensor split. In the third step, a concatenation of the multiple matrices is served as an input to the next layer network in the transformer network. After performing these three steps, the multi-head attention model can be integrated into the encoder and into the decoder framework of the transformer network and to be trained endto-end.

This principle will now be explained in detail. The self-attention function can be represented by a linear function, for example, by a linear combination representation of a set of basis vectors.

The output of the self-attention function is represented by a linear combination of the set of the basis vectors: $Attention \left(Q, K, V\right) = \left({e}_{1},…,{e}_{n}\right) M ,$ wherein *e*₁, ..., *eₙ* are the basis vectors from a vector space S. The basis vectors *e*₁, ..., *eₙ* are linearly independent and *Q, K, V* are the factors matrices which are linearly represented (as described in step S401) by the set of the basis vectors *e*₁, *..., eₙ.* M ∈ *R*^{*n*×*d*} is a coefficient matrix, and (as noted above) *d* is a dimension of the factor matrices *Q, K* and *V*.

A new attention function can be constructed via the Single-block attention module. In the step S402, a 3-order diagonal tensor g is initialized. The 3-order diagonal tensor *g* is a trainable tensor. *R* is the rank of the tensor. *N* is the length of the input sequence. The function of the single-block attention module is computed based on the Tucker decomposition: ${Atten}_{TD} \left(G, Q, K, V\right) = G {\cdot }_{1} Q {\cdot }_{2} K {\cdot }_{3} V = {\sum }_{i = 1}^{I} {\sum }_{j = 1}^{J} {\sum }_{m = 1}^{M} {G}_{ijm} {Q}_{i} ∘ {K}_{j} ∘ {V}_{m}$ wherein *G* is the core tensor, *i, j,* and *m* are indexes of the core tensor *G*. An operator " ∘" is the outer product, an operator " ●*_{z}*" is denoted as a tensor-tensor product on the *z-th* order and *z* ∈ (1, *... , d*). *Qᵢ, Kⱼ* and *Vₖ* are column vectors from matrices *Q, K,* and *V*, where *Q* ∈ *R*^{*n*×}*^{d} K* ∈ *R*^{*n*×*d*} and *V* ∈ *R*^{*n*×}*^{d}.* In one non-limiting example, *I=J=M=R.* The core tensor *G* is defined as follows: $G _ ijm = \left\{\begin{matrix}rand \left(0, 1\right) & i = j = m \\ 0 & otherwise\end{matrix}\right.$ where the *rand(0,1)* is a random function, and the diagonal entries of the core tensor *G* form the vector g. Each entry *gᵣ* ∈ (0, 1), *r* ∈ (1, ..., *R*). The vector g is a trainable weight matrix. The trainable weight matrix g can be computed by *softmax* function. The *softmax* function converts a vector of real numbers into a probability distribution.

The output of the single-block attention function is the 3-order tensor which is given by linear computation. The prior art compression of the multi-head module is made by multiple groups of linear mappings. The present document uses three linear mappings for the matrices *Q, K,* and *V*. At the output of three linear mappings, three factor matrices *Q, K,* and *V* are considered to be three factor matrices in reconstructing the multi-linear attention in the step S403.

In the non-claimed example of Fig. 4, the reconstruction of the multi-linear attention is shown. Let us suppose that *h* is the number of the multi-head modules and *d* is the dimension of the factor matrices *Q, K,* and *V*. The compression ratios are computed by the following equation: (3 *x h x d*)/(*3* x *d+h*). In one non-limiting example, the number of the multi-head modules *h* is set to be eight and the dimension *d* is set to be 512. In this non-limiting example, the compression ratios achieve eights. In other words, almost eight times parameters are reduced in the attention layer.

Hyperparameters in machine learning are those parameters that are tuneable and are defined by the user to control the machine learning process. The hyperparameters are used to improve the learning of the large language model. The values of the hyperparameters are set before starting the learning process of the large language model. By contrast, the values of other parameters (typically node weights) are derived via training of the language model.

For each core tensor, a location of a physical edge and a way to connect the core tensor to other nodes in the tensor network is chosen. The physical edge is an edge connected to only one node of the tensor network. According to the claimed invention, the nodes are connected in an MPS (Matrix Product State) structure.

Another hyperparameter required from the user is the choice of a maximum virtual edge dimension. The virtual edge is an edge between two nodes of the tensor network 49. The virtual edge dimension having too large values would disrupt a parameter reduction effect provided by the tensorization process. The virtual edge dimension having too small values may lead to significantly different matrices at the output from the input matrices when the MPS structures are contracted.

An optimal virtual edge dimension for the MPS form should be chosen in order to achieve an optimal algorithm's performance. According to the invention, a random search for permutations is used to determine the optimal virtual edge dimension of the MPS form. In machine learning, the random search is a strategy that uses random combinations of the hyperparameters to identify the optimal answer for the established model.

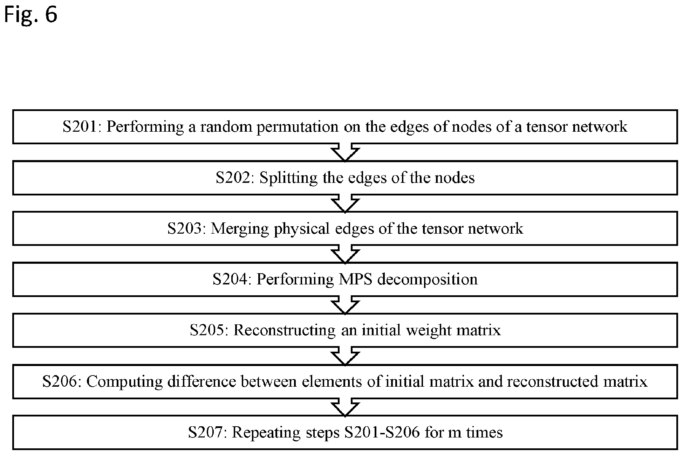

Fig. 6 shows the random search algorithm. In the first step S201 of the random search algorithm, a random permutation is performed on the edges of the nodes of the tensor network 49.

In step S202, the edges of the nodes are split into *n* groups, wherein *n* is the number of tensors in the tensor network 49.

In step S203, all the physical edges of the tensor network 49 are merged in one index. This index is a multi-index tensor transformed into a single-index vector.

In step S204, the MPS decomposition is performed.

In step S205, the initial weight matrix is reconstructed by, firstly, contracting the MPS forms, then by reshaping the MPS forms into the permuted Cartesian form, followed by the step of permuting the edges of the tensor network with reverse of the random permutation and finally by reshaping the Cartesian form to the matrix form.

In step S206, the difference between the elements of the (initial, i.e. before decomposition) weight matrix and the reconstructed weight matrix are computed. If the number of parameters is smaller than the number of elements in the initial weight matrix and the largest difference between two factors is smaller than the previous best one, the MPS is saved as the best contraction strategy.

In step S207, steps S201-S207 are repeated for *m* times, where *m* is an external parameter defined by the user. After repeating steps S201-S207, the best MPS decomposition is defined.

After defining the best MPS decomposition in the step S104, the tensorized layer is constructed in the step S105. The best MPS decomposition is a decomposition with the best accuracy possible and less relevant information lost during the compression of the weight layer. The best accuracy in one non-limiting example is equal to 87% of original model with compression to 70% of the original model. In another non-limiting example, the accuracy is equal to 85% of the original model with compressing to 60% of the original model. In yet another non-limiting example, the accuracy is 81% of the original model with compressing to 50% of the original model.

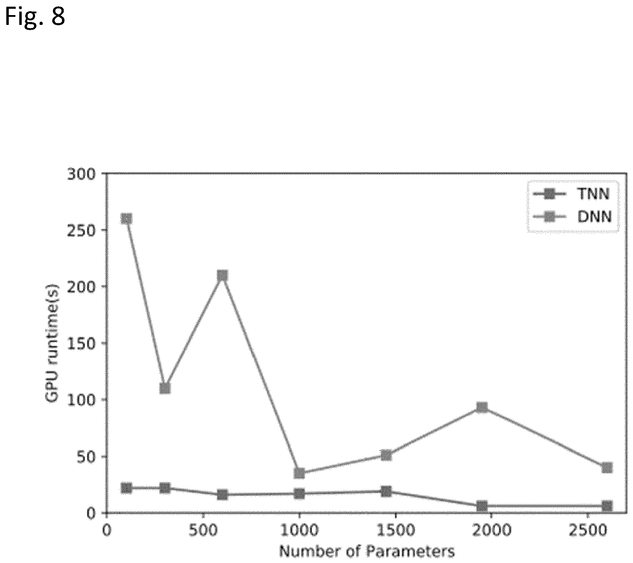

Fig. 8 shows a comparison of time taken to converge a Heston model for Tensor Neural Networks (TNNs) and for classical Dense Neural Networks (DNNs). The Heston model is a mathematical model used in finance to describe the evolution of the volatility of an underlying asset. According to Fig. 8, TNNs converge up to twelve times faster than equivalent DNNs with the same number of the parameters. Even the smallest TNN architecture (e.g., with 161 parameters) outperforms the DNNs equivalent in terms of convergence speed as shown on Fig. 8.

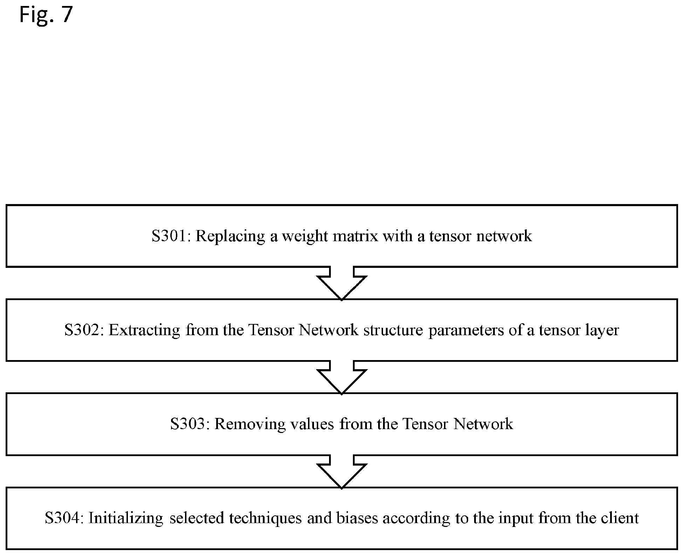

Construction of the tensorized layer comprises four steps as shown on Fig. 7. In a first step S301, in order to initialize the tensor layer, the weight matrix is replaced with the tensor network 49 to collect the information about the tensorization technique. The information about the tensorization technique enables to reconstruct the initial weight matrix. With the (compressed) tensor network 49, the initial weight matrix could be reconstructed with the high accuracy.

In a second step S302, the tensor layer's parameters are extracted from the tensor network 49.

In a third step S303, the values are removed from the tensor network 49 in order to free up a memory to avoid keeping unnecessary data in the data storage unit 40 of the system 100.

In a fourth step S304, the selected technique and biases are initialized according to the input from the user.

The second change in the tensor layer occurs during a feed-forward step. Before a classical forward step, the weight matrix needs to be reconstructed. The reconstruction of the weight matrix provides more efficient strategies for the MPS contraction. For the MPS contraction, the language model parameters need to be reintroduced into the tensor network 49. Then the tensor layer is contracted to obtain the weight matrix. After contraction of the tensor layer, the memory of the structure of the tensor network 49 is freed up again to avoid keeping unnecessary data in the data storage unit 40.

When the tensor network 49 is initialised, the tensorized layer is replaced in the initial language model. Attention has to be paid to allocate the tensorized layer precisely in the place from which the tensor layer has been recycled. In one non-limiting example, the allocation of the tensor layer exactly in the same place is done by conserving the name of the initial module.

### Benchmarking

To evaluate the method set out in this document, the method was used to compress the LlaMA-2 7B model. This model represents the "smallest" within the "large" category of LLMs in the open-source LlaMA series, developed by META. As noted above, the model encompasses 7 billion parameters and has been pre-trained on over 2 trillion tokens. The model offers a context length of 4096 and has undergone fine-tuning with more than 1 million human annotations. In float32, the model occupies 24GB in memory, and 12GB in float16 after mild quantization.

The method involved using MPOs with a bond dimension of χ ≈ 100 in SA and MLP layers on the float16 version of LlaMA-2 7B. As a result, the model was reduced down to 2 billion parameters and a memory size of 3.7Gb, which is 30% of its original un-tensorized size in float16, and 15% of the original LlaMA-2 7B in float32 (if the mild quantization is also considered). In other words, the compression method for the tensor network already reduces the number of parameters in the model and its size in memory to 30% of the original size, while the mild quantization from float32 to float16 further reduces the size by an additional factor of 2.

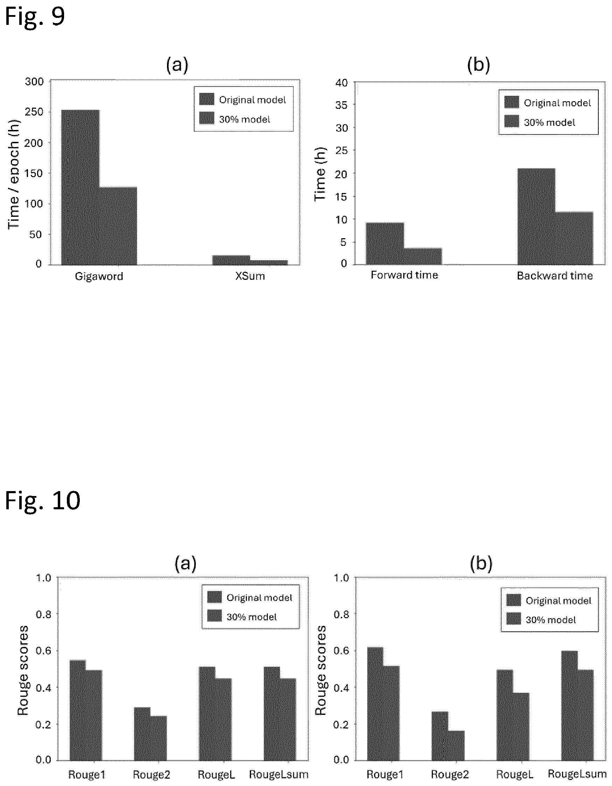

To assess the model's performance, the task of text summarization was used. For this purpose, two open-source datasets: XSum and Gigaword were selected. Both the original and compressed models underwent additional training for a limited number of epochs using these datasets. Notably, the training time of the compressed model was approximately twice as fast as the training for the uncompressed version, see Fig. 9. Subsequent to this training, the Rouge scores were calculated. The Rouge scores are metrics for evaluating automatic text summarization and machine translation. A comparison of the Rouge scores for both models, post-retraining on the two datasets, is illustrated in Fig. 10. This comparison reveals that the compressed model retains about 90% of the original model's accuracy in float16 despite being only 30% of its original size.

The calculations for this benchmark were performed on a single AWS machine with eight NVIDIA A100 Tensor Core GPUs using distributed retraining, illustrating in turn that the method is GPU-compatible.

### REFERENCE NUMERALS

- 10: Central Processing Unit (CPU)
- 20: Input device
- 30: Output device
- 35: Graphics Processing Unit (GPU)
- 37: Field programmable gate array
- 40: Data storage unit
- 41: Field programmable gate array (FGPA)
- 45: Training data
- 47: Large language model
- 48: Weight matrix
- 49: Tensor network
- 50: Quantum Processor
- 60: Input data
- 100: System

## Claims

1. A computer implemented method for compressing pre-trained layers of a large language model (LLM) (47) having a plurality of layers and weight matrices (48), the method comprising:
- identifying (S101) layers of the LLM (47) with the weight matrices (48);
- decomposing (S104a) the weight matrices (48) of the LLM (47) into a tensor network (49);
- compressing (S104b) the tensor network (49); and
- storing (S104c) the compressed tensor network (49) in a data storage unit (40); the method being **characterised in that** the compressing (S104b) further comprises determining an optimal virtual edge dimension of a Matrix Product States (MPS) form, through:
- using a random search algorithm for performing (S201) a permutation on edges of nodes of the tensor network;
- splitting (S202) the edges of the nodes of the tensor network (49) into n groups;
- merging (S203) the edges of the nodes of the tensor network into a single-index vector;
- performing (S204) the MPS decomposition;
- reconstructing (S205) an initial weight matrix (48);
- computing (S206) a difference between elements of the initial weight matrix (48) and the reconstructed weight matrix (48), wherein, if the number of parameters is smaller than the number of elements in the initial weight matrix (48) and the largest difference between two factors is smaller than the previous best one, the MPS is saved as the best contraction strategy; and
- repeating (S207) steps S201-S206 for *m* times.

2. The computer implemented method of claim 1, wherein the layers of the LLM (47) are at least one of self-attention layers or multi-perceptron layers.

3. The computer-implemented method of claim 1 or 2, wherein the decomposing (S104a) of the weight matrix into the tensor network (49) comprises creating a tensor star formed from a plurality of tensors, the plurality of tensors having a smaller dimension than the weight matrices (48).

4. The computer-implemented method of claim 3, wherein the plurality of tensors comprises at least pre-programmed one core tensor.

5. A computer system for compressing parameters of a large language model (LLM) comprising a compressing module (110) for compressing the parameters of the large language model, the compressing module being configured to perform the method of any one of claims 1 to 4.

6. Use of the method according to at least one of claims 1 to 4, wherein the large language model (LLM) is a deep neural network for implementing at least one of translation, text summarization, question answering, or chatbot functionality tasks.

## Patentansprüche

1. Computerimplementiertes Verfahren zum Komprimieren vortrainierter Schichten eines großen Sprachmodells (LLM) (47), das eine Vielzahl von Schichten und Gewichtsmatrizen (48) umfasst, wobei das Verfahren Folgendes umfasst:
- Identifizieren (S101) von Schichten des LLM (47) mit den Gewichtsmatrizen (48);
- Zerlegen (S104a) der Gewichtsmatrizen (48) des LLM (47) in ein Tensornetzwerk (49);
- Komprimieren (S104b) des Tensornetzwerks (49); und
- Speichern (S104c) des komprimierten Tensornetzwerks (49) in einer Datenspeichereinheit (40);
wobei das Verfahren **dadurch gekennzeichnet ist, dass** das Komprimieren (S104b) ferner das Bestimmen einer optimalen virtuellen Kantendimension einer Matrixproduktzustandsform (MPS) durch Folgendes umfasst:
- Verwenden eines Zufallssuchalgorithmus zum Durchführen (S201) einer Permutation an Kanten von Knoten des Tensornetzwerks;
- Teilen (S202) der Kanten der Knoten des Tensornetzwerks (49) in n Gruppen;
- Zusammenführen (S203) der Kanten der Knoten des Tensornetzwerks zu einem Einzelindex-Vektor;
- Durchführen (S204) der MPS-Zerlegung;
- Rekonstruieren (S205) einer anfänglichen Gewichtsmatrix (48);
- Berechnen (S206) einer Differenz zwischen Elementen der anfänglichen Gewichtsmatrix (48) und der rekonstruierten Gewichtsmatrix (48), wobei, wenn die Anzahl von Parametern kleiner als die Anzahl von Elementen in der anfänglichen Gewichtungsmatrix (48) ist und die größte Differenz zwischen zwei Faktoren kleiner als die vorherige Beste ist, eine MPS als die beste Kontraktionsstrategie gespeichert wird, und
- m-maliges Wiederholen (S207) der Schritte S201 bis S206.

2. Computerimplementiertes Verfahren nach Anspruch 1, wobei die Schichten des LLM (47) mindestens eine von Selbstaufmerksamkeitsschichten oder Multi-Perceptron-Schichten sind.

3. Computerimplementiertes Verfahren nach Anspruch 1 oder 2, wobei das Zerlegen (S104a) der Gewichtungsmatrix in das Tensornetzwerk (49) das Erzeugen eines Tensorsterns umfasst, der aus einer Vielzahl von Tensoren gebildet ist, wobei die Vielzahl von Tensoren eine kleinere Dimension als die Gewichtungsmatrizen (48) aufweist.

4. Computerimplementiertes Verfahren nach Anspruch 3, wobei die Vielzahl von Tensoren mindestens einen vorprogrammierten zentralen Tensor umfasst.

5. Computersystem zum Komprimieren von Parametern eines großen Sprachmodells (LLM), umfassend ein Kompressionsmodul (110) zum Komprimieren der Parameter des großen Sprachmodells, wobei das Kompressionsmodul konfiguriert ist, um das Verfahren nach einem der Ansprüche 1 bis 4 durchzuführen.

6. Verwendung des Verfahrens nach mindestens einem der Ansprüche 1 bis 4, wobei das große Sprachmodell (LLM) ein tiefes neuronales Netzwerk zum Implementieren von mindestens einem von Übersetzungsaufgaben, Textzusammenfassung, Fragebeantwortung oder Chatbot-Funktionalität ist.

## Revendications

1. Procédé mis en œuvre par ordinateur pour compresser des couches pré-entraînées d'un grand modèle de langage (LLM) (47) ayant une pluralité de couches et de matrices de pondération (48), le procédé comprenant :
- identifier (S101) des couches du LLM (47) avec les matrices de pondération (48) ;
- décomposer (S104a) les matrices de pondération (48) du LLM (47) en un réseau tenseur (49) ;
- compresser (S104b) le réseau tenseur (49) ; et
- stocker (S104c) le réseau tenseur compressé (49) dans une unité de stockage de données (40) ;
le procédé étant **caractérisé en ce que** compresser (S104b) comprend en outre déterminer une dimension de bord virtuel optimale d'une forme d'état de produit de matrice (MPS), en :
- utilisant un algorithme de recherche aléatoire pour effectuer (S201) une permutation sur des bords de nœuds du réseau tenseur ;
- divisant (S202) les bords des nœuds du réseau tenseur (49) en n groupes ;
- fusionnant (S203) les bords des nœuds du réseau tenseur en un vecteur d'indice unique ;
- exécutant (S204) la décomposition MPS ;
- reconstruisant (S205) une matrice de pondération initiale (48) ;
- calculant (S206) une différence entre des éléments de la matrice de pondération initiale (48) et de la matrice de pondération reconstruite (48), dans lequel, si le nombre de paramètres est inférieur au nombre d'éléments dans la matrice de pondération initiale (48) et la plus grande différence entre deux facteurs est inférieure à la meilleure précédente, une MPS est sauvegardée en tant que meilleure stratégie de contraction, et
- répétant (S207) les étapes S201 à S206 *m* fois.

2. Procédé mis en œuvre par ordinateur selon la revendication 1, dans lequel les couches du LLM (47) sont au moins l'une parmi des couches d'auto-attention ou des couches multi-perceptrons.

3. Procédé mis en œuvre par ordinateur selon la revendication 1 ou 2, dans lequel décomposer (S104a) la matrice de pondération en le réseau tenseur (49) comprend créer une étoile de tenseur formée à partir d'une pluralité de tenseurs, la pluralité de tenseurs ayant une dimension plus petite que les matrices de pondération (48).

4. Procédé mis en œuvre par ordinateur selon la revendication 3, dans lequel la pluralité de tenseurs comprend au moins un tenseur central préprogrammé.

5. Système d'ordinateur pour compresser des paramètres d'un grand modèle de langage (LLM) comprenant un module de compression (110) pour compresser les paramètres du grand modèle de langage, dans lequel le module de compression est configuré pour réaliser le procédé selon l'une quelconque des revendications 1 à 4.

6. Utilisation du procédé selon au moins l'une quelconque des revendications 1 à 4, dans lequel le grand modèle de langage (LLM) est un réseau neuronal profond pour mettre en œuvre au moins l'une parmi des tâches de traduction, de résumé de texte, de réponse à des questions ou de fonctionnalité de chatbot.
